# EUROPÄISCHE PATENTSCHRIFT

(11) **EP 0 818 136 B1**
(45) Veröffentlichungstag und Bekanntmachung des Hinweises auf die Patenterteilung: **02.11.2000**
(21) Anmeldenummer: 97110721.4
(22) Anmeldetag: 01.07.1997
(51) Int. Cl.: A01D 45/02, A01D 57/22

(54) **Einrichtung zum Häckseln von Pflanzen**
Stalk crop chopping device
Dispositif pour hacher des végétaux

(30) Priorität: 11.07.1996 DE 19627872
(43) Veröffentlichungstag der Anmeldung: 14.01.1998
(73) Patentinhaber: CLAAS KGaA, 33428 Harsewinkel (DE)
(72) Erfinder: Gausmann, Ludger, 49170 Hagen a.T.W. (DE); Arnold, Andreas, 33619 Bielefeld (DE); Amsbeck, Uwe, 33428 Harsewinkel (DE); Buhne, Hubert, 48324 Sendenhorst (DE)

(56) Entgegenhaltungen:
- DE-A- 2 064 991
- DE-A- 2 209 517
- DE-U- 9 316 683
- US-A- 2 634 569

## Beschreibung

Die Erfindung betrifft einen Feldhäcksler der selbstfahrenden oder gezogenen Bauart, mit einer durch Häckseltrommel und Gegenschneide gebildeten Häckseleinrichtung mit vorgeordneter Förderstrecke und einem in Fahrtrichtung offenen rahmenartigen Holzhäcksel-Vorsatzgerät für baumartige Pflanzen, welches im wesentlichen aus zwei gegenläufig antreibbaren, in einem relativ geringen Abstand zum Erdboden einstellbaren Kreismessern zum Abtrenne der zu häckselnden Pflanzen und einem ein Widerlager für die Kreismesser bildenden, teilweise oberhalb der Kreismesser ortsfest gelagerten Trennkeil besteht, wobei weiterhin dem Vorsatzgerät ein schräg zur Fahrtrichtung weisender, gegebenenfalls neigungsverstellbarer, gegenüber dem Vorsatzgerät voreilender Niederhaltebügel zugeordnet ist, das Vorsatzgerät für jedes Kreismesser eine die geschnittenen Pflanzen in die Förderstrecke des Feldhäckslers leitende Einrichtung aufweist, und wobei jede der die Pflanzen in die Förderstrecke des Feldhäckslers leitende Einrichtung aus einer in einer zur Horizontalen geneigt verlaufenden Ebene koaxial zur Drehachse des zugehörigen Kreismessers umlaufenden Zinkenschar besteht, deren engster Abstand zum Erdboden sich an der in Fahrtrichtung vorauslaufenden Seite befindet.

Eine derartige Häckseleinrichtung ist beispielsweise durch die DE-GM 93 16 683 bekannt. Mit derartigen Feldhäckslern werden z.B. Weiden oder Pappeln für die Verbrennung geerntet und gehäckselt. Sie sind zum Zeitpunkt der Ernte ca. 3 bis 5 m hoch. Damit die kurz oberhalb des Bodens geschnittenen Pflanzen einwandfrei in die Förderstrecke des Häckslers eingeführt werden können, ist es erforderlich, daß die Pflanzen mit ihrem geschnittenen Ende voraus in die Förderstrecke des eigentlichen Häckslers geführt werden. Die Praxis hat nun gezeigt, daß dies bei einem Feldhäcksler der eingangs näher bezeichneten Art unter ungünstigen Erntebedingungen nicht immer gewährleistet ist. In einem solchen Fall entsteht vor der Förderstrecke des Häckslers ein Stau, der den Häckslerfahrer dazu zwingt, sein Fahrzeug anzuhalten und den Stau manuell zu beseitigen.

Des weiteren ist die US-A-2,634,569 bekannt. Die dort gezeigten Zinkenschare unterstützen zwar die Gutförderung, die sind jedoch ungeeignet, schwereres Gut anzuheben und unter allen Erntebedingungen der Häckseleinrichtung sicher zuzuführen.

Der vorliegenden Erfindung liegt daher die Aufgabe zugrunde, den bekannten Feldhäcksler so auszubilden, daß die geschnittenen Pflanzen auch unter widrigen Erntebedingungen stets einwandfrei mit dem geschnittenen Ende vorauslaufend der Förderstrecke des Häckslers zugeführt werden.

Diese Aufgabe wird dadurch gelöst, daß die Ebene, in der die Zinkenscharen rotieren, stärker zur Horizontalen geneigt ist, als die Ebene, in der das jeweils zugehörige Kreismesser rotiert und daß sich die Hüllkreise der Zinkenenden im Bereich eines zwischen den beiden Kreismessern (28) vorgesehenen Einlaufspaltes (36) überschneiden. Der Wirkdurchmesser der Zinkenschar ist größer als der der Kreismesser.

Nach einem weiteren wesentlichen Merkmal der Erfindung ist beiden Zinkenscharen eine gemeinsame horizontale und quer zur Fahrtrichtung verlaufende der Förderstrecke des Häckslers unmittelbar vorgeordnete Förderwalze zugeordnet, deren Hüllkreis unterhalb der rotierenden Zinkenschar an der Stelle verläuft, an der die Zinkenscharen ihren größten Abstand zum Erdboden aufweisen. Die vorauslaufenden geschnittenen Enden der Pflanzen treten in den Hüllkreis der Förderwalze, die die Stengel ziehenderweise anhebt und in die nahezu horizontale Lage überführt.

Um einen sicheren Transport der Pflanzen in horizontaler Lage bis zur Förderstrecke des Häckslers aufrecht zu erhalten, besteht die Förderwalze aus einem zylindrischen Grundkörper, auf den mit gleichem Abstand zueinander mit Messerschneiden versehene Leisten fest aufgesetzt sind. Die federgelagerte Zinkenschar drückt die Stengel gegen die Förderwalze, deren Messer sich in die Pflanzen krallen, so daß durch den hierdurch bewirkten kurzzeitigen Formschluß die Pflanzen nach oben über die Förderwalze hinweg geschoben bze. gehoben werden.

Auf konstruktiv einfache Art und Weise ist jedes Kreismesser von einer Welle angetrieben, welche von einem maschinenfesten Tragrohr bereichsweise umgeben ist, um das die Zinken rotieren. Jedes Tragrohr weist dabei einen Flansch auf, auf den ein Gehäuse drehbar aufgesetzt ist und welches sowohl ein Kettenrad als auch die Zinken trägt. Zwecks Antrieb des Gehäuses und zwecks Lagerung der Zinken weist das Gehäuse einen Kragen aus, mit dem das Kettenrad und eine Ringplatte fest verbunden sind,. wobei die Ringplatte die Zinken auswechselbar trägt.

Um möglichst wenig Antriebselemente verwenden zu müssen, werden die Förderwalze und die Zinken von einer gemeinsamen Welle aus angetrieben.

Es hat sich als zweckmäßig erwiesen, wenn die Rotationsebene der Zinken auf den Einzugsspalt der Förderstrecke des Häckslers zielt, wodurch die Pflanzen auf geradem Weg ohne jegliche Umlenkung transportiert werden können. Um sich den jeweiligen Erntebedingungen optimal anpassen zu können, ist der Abstand der Förderebene der Förderzinken zum Kreismesser veränderbar. Zu diesem Zweck ist die Antriebswelle des Kreismessers teleskopierbar in einer Hohlwelle verdrehbar zu dieser gelagert, wobei die Hohlwelle über einen am Tragrohr befestigten Ölmotor antreibbar ist. Dabei ist es empfehlenswert, daß das der Hohlwelle abgewandte Ende der Kreismesserantriebswelle im Tragrohr höhenverlagerbar gehalten ist.

Nach einem weiteren Merkmal der Erfindung ist vorgesehen, die Umfangsgeschwindigkeit der Zinken gegenüber der Umfangsgeschwindigkeit der Schneidmesser veränderbar auszugestalten.

Im folgenden soll die Erfindung anhand eines Ausführungsbeispieles und mehrerer dieses darstellender Figuren erläutert werden. Dabei zeigt:

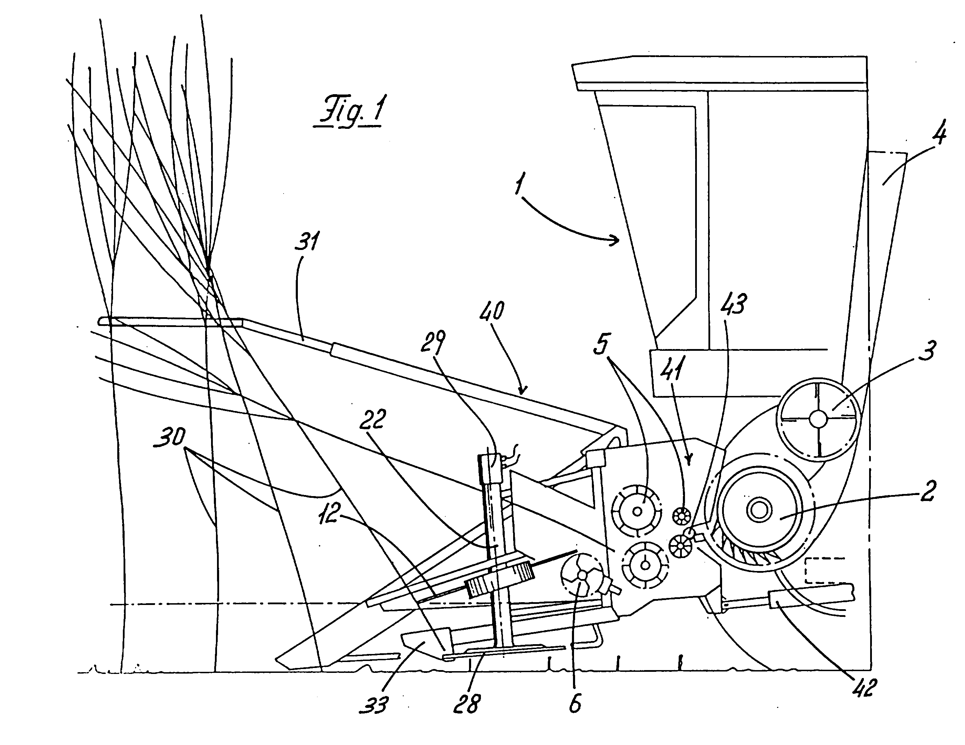

- Figur 1: den vorderen Teil eines Feldhäckslers in der Seitenansicht,
- Figur 2: eine bereichsweise Draufsicht auf den vorderen Teil eines Feldhäckslers nach Figur 1,
- Figur 3: eine vergrößerte und detaillierte Darstellung eines Teiles des in Figur 1 dargestellten Feldhäckslers und
- Figur 4: eine Zinkenschar in der Draufsicht mit der sowohl beide Zinkenscharen als auch die Förderwalze antreibende Welle.

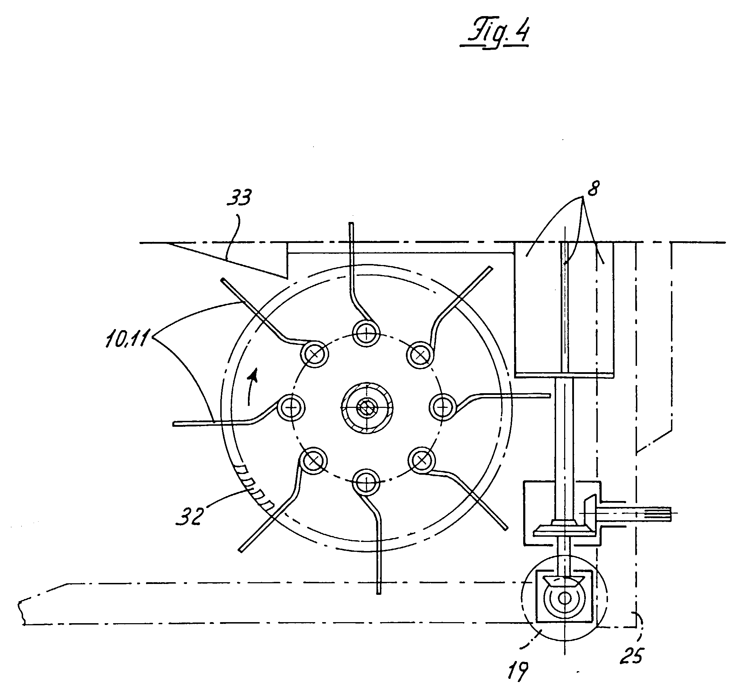

Mit 1 ist der vordere Teil eines selbstfahrenden Häckslers bezeichnet der mit einer Häckseltrommel 2 und einem Nachbeschleuniger 3 ausgerüstet ist, durch welchen das gehäckselte Gut über das Auswurfrohr 4 die Maschine verläßt, und einem Begleit- oder Anhänge Fahrzeug zugeführt wird. Der Häckseltrommel 2 ist eine aus Förderwalzenpaaren 5 gebildete Förderstrekke vorgeordnet. Der Förderstrecke 5 unmittelbar vorgeordnet ist eine Förderwalze 6, die aus einem zylindrischen Grundkörper 7 besteht, auf den in gleichen Abständen zueinander Leisten 8 aufgesetzt sind, welche an ihren freien Enden Messerschneiden 9 aufweisen. Die Förderwalze 6 ist horizontal und quer zur Fahrtrichtung angeordnet und rotiert knapp unterhalb der Rotationsebene zweier Zinkenscharen 10 und 11. Jede Zinkenschar 10 bzw. 11 besteht aus einer Vielzahl von Zinken 12, welche mit einer Ringplatte 13 federnd verschraubt sind. Die Ringplatte 13 ist fest mit dem Kragen 14 eines zylindrischen Gehäuses 15 verbunden, welches rotierbar auf einem Rohrflansch 16 gelagert ist. Zwecks Antrieb des Gehäuses 15 ist an dem Kragen 14 eine Kettenrad 17 befestigt, das über eine Kette 18 mit einem weiteren Kettenrad 19 in Antriebsverbindung steht. Jedes der beiden Kettenräder 19 erhält seinen Antrieb über die Welle 20 unter Zwischenschaltung von Winkelgetrieben 21. Insbesondere aus Figur 4 geht hervor, daß auch die Förderwalze 6 unmittelbar von der Welle 20 angetrieben wird.

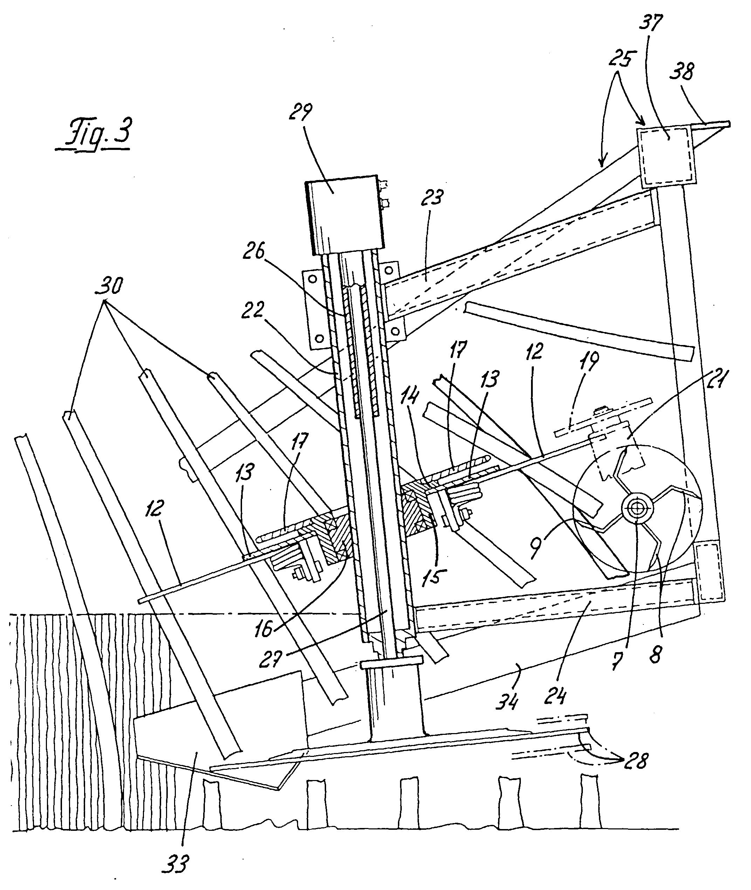

In Figur 3 ist dargestellt, daß jeder Flansch 16 fest mit einem Tragrohr 22 verbunden ist, welches über Streben 23 und 24 am Grundrahmen 25 gehalten wird. In jedem Tragrohr 22 lagert eine Hohlwelle 26, in die die Antriebswelle 27 der Kreismesser 28 achsial unverdrehbar eingeschoben ist. Ihren Antrieb erhalten die Kreismesser 28 über einen Ölmotor 29. Um den Abstand der Kreismesser 28 zu den ihnen zugeordneten Zinken 12 verändern zu können, ist die Antriebswelle 27 mehr oder weniger weit in die Hohlwelle 26 einschieb- und arretierbar.

Aus der Figur 3 ist zu erkennen, daß die Zinken 12 in einer zur Horizontalen geneigt verlaufenden Ebene rotieren, wobei der engste Abstand der Rotationsebene zum Erdboden an der vorauslaufenden Seite ist und 40 cm beträgt. Dieser Abstand gewährleistet zum einen ein sicheres Umlenken der vom Kreismesser 28 geschnittenen Pflanzen 30 von der zunächst senkrechten in eine horizontale Lage, wobei dieser Vorgang durch einen Niederhalter 31 unterstützt wird.

Stengelförmige Pflanzen werden in der Regel im Winter, also auch unter Schneebedingungen, geerntet. Um dabei zu verhindern, daß durch die Zinken 12 und von dem Erntegut Schnee in die eigentlichen Häckselaggregate geschleudert bzw. mitgenommen wird, ist der Abstand von 40 cm gewählt worden. Hierdurch wird eine sich sehr negativ auswirkende Anfeuchtung des Häckselgutes weitgehendst vermieden, da zum einen die Zinkenscharen 10, 11 sich oberhalb der Schneehöhe bewegen und zum anderen die Enden der Stengel schräg ansteigend aus dem Schneebereich angehoben werden.

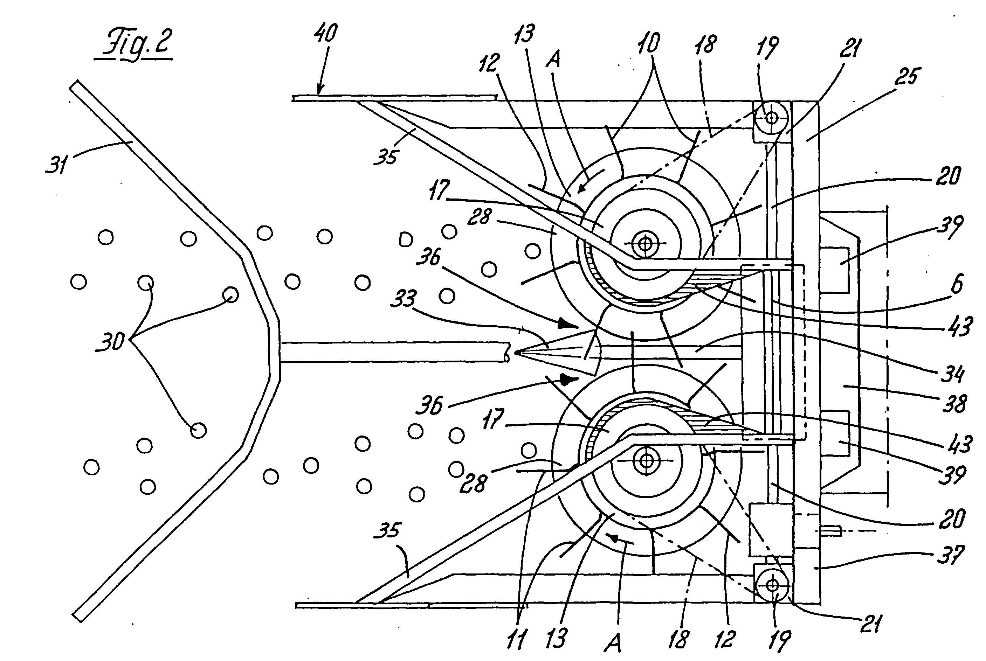

In Figur 2 ist durch die Pfeile A angedeutet, daß die Zinkenscharen 11 und 10 wie auch die Kreismesser 28 gegenläufig angetrieben werden. Um die Arbeit der Kreismesser 28 mit ihren Sägezähnen 32 zu unterstützen ist im Bereich des Einlaufspaltes zwischen den beiden Kreismessern 28 ein Trennkeil 33 vorgesehen, der über ein Profileisen 34 mit dem Grundrahmen 25 fest verbunden ist. Über rahmenfeste Stützen 35 werden dabei die Pflanzen 30 in den Einlaufspalt 36 der Kreismesser 28 geführt.

Die Figur 2 zeigt, daß mit dem oberen horizontal verlaufenden Profil 37 des Grundrahmens 25 ein Konsolblech 38 verschweißt ist, welches Aufhängeöffnungen 39 aufweist. Mittels dieser Aufhängeöffnungen 39 wird das gesamte Holzerntevorsatzgerät 40 über nicht näher dargestellte Kupplungen am vorderen Teil des Feldhäckslers angehängt. Wie an sich bei Häckslern bekannt, kann der die Förderwalzenpaare 5 beinhaltende Maschinenbereich 41 über eine Kolbenzylindereinheit 42 um die Schwenkachse 43 höhenverstellt werden. Hierdurch verändert sich folglich auch der Abstand der Kreismesser 28 des Holzvorsatzgerätes 39 zum Ackerboden.

### Bezugszeichenaufstellung

- 1 -: Vorderer Teil
- 2 -: Häckseltrommel
- 3 -: Nachbeschleuniger
- 4 -: Auswurfrohr
- 5 -: Walzenpaare
- 6 -: Förderwalze
- 7 -: Grundkörper
- 8 -: Leisten
- 9 -: Messerschneiden
- 10 -: Zinkenscharen
- 11 -: Zinkenscharen
- 12 -: Zinken
- 13 -: Ringplatte
- 14 -: Kragen
- 15 -: Gehäuse
- 16 -: Rohrflansch
- 17 -: Kettenrad
- 18 -: Kette
- 19 -: Kettenrad
- 20 -: Welle
- 21 -: Winkelgetriebe
- 22 -: Tragrohr
- 23 -: Strebe
- 24 -: Strebe
- 25 -: Grundrahmen
- 26 -: Hohlwelle
- 27 -: Antriebswelle
- 28 -: Kreismesser
- 29 -: Oelmotor
- 30 -: Jungpflanze
- 31 -: Niederhalter
- 32 -: Sägezähne
- 33 -: Trennkeil
- 34 -: Profileisen
- 35 -: Stützen
- 36 -: Einlaufspalt
- 37 -: Profil
- 38 -: Konsolblech
- 39 -: Ösen
- 40 -: Vorsatzgerät
- 41 -: Bereich
- 42 -: Zylindereinheit
- 43 -: Abstreifer

## Patentansprüche

1. Feldhäcksler der selbstfahrenden oder gezogenen Bauart, mit einer durch Häckseltrommel (2) und Gegenschneide gebildeteten Häckseleinrichtung mit vorgeordneter Förderstrecke und einem in Fahrtrichtung offenen rahmenartigen HolzhäckselVorsatzgerät (40) für stengelförmige Pflanzen, welches im wesentlichen aus zwei gegenläufig antreibbaren, in einem relativ geringen Abstand zum Erdboden einstellbaren Kreismesser (28) zum Abschneiden der zu häckselnden Pflanzen und einem ein Widerlager für die Kreismesser (28) bildenden, teilweise oberhalb der Kreismesser (28) ortsfest gelagerten Trennkeil (33) besteht, wobei weiterhin dem Vorsatzgerät (40) ein schräg zur Fahrtrichtung weisender, gegebenenfalls neigungsverstellbarer, gegenüber dem Vorsatzgerät (40) voreilender Niederhaltebügel (31) zugeordnet ist, das Vorsatzgerät 40 für jedes Kreismesser (28) eine die geschnittenen Pflanzen in die Förderstrecke des Feldhäckslers leitende Einrichtung aufweist, und wobei
jede der die Pflanzen in die Förderstrecke (5) des Feldhäckslers (1) leitende Einrichtung aus einer in einer zur Horizontalen geneigt verlaufenden Ebene koaxial zur Drehachse (27) des zugehörigen Kreismessers (28) umlaufenden Zinkenschar (10 bzw. 11) besteht, deren engster Abstand zum Erdboden sich an der in Fahrtrichtung vorauslaufenden Seite befindet,
**dadurch gekennzeichnet,**
daß die Ebene, in der die Zinkenscharen (10 bzw. 11) rotieren, stärker zur Horizontalen geneigt ist, als die Ebene, in der das jeweils zugehörige Kreismesser (28) rotiert und daß sich die Hüllkreise der Zinkenenden im Bereich eines zwischen den beiden Kreismessern (28) vorgesehenen Einlaufspaltes (36) überschneiden.

2. Feldhäcksler nach Anspruch 1,
**dadurch gekennzeichnet**,
daß den rotierenden Zinkenscharen (10, 11) jeweils ein die Kettenräder (17) teilweise abdeckender und den Einlaufspalt (36) begrenzende Abstreifer (43) zugeordnet ist.

3. Feldhäcksler nach den Ansprüchen 1 oder 2,
**dadurch gekennzeichnet,**
daß der Hüllkreis des Kreismessers (28) kleiner ist als der der zugehörigen Zinkenschar (10, 11).

4. Feldhäcksler nach den Ansprüchen 1 bis 3,
**dadurch gekennzeichnet,**
daß beiden Zinkenscharen (10 und 11) eine gemeinsam horizontal und quer zur Fahrtrichtung verlaufende der Förderstrecke des Häckslers unmittelbar vorgeordnete Förderwalze (6) zugeordnet ist, deren Hüllkreis unterhalb der rotierenden Zinkenscharen (10 bzw. 11) an der Stelle verläuft, an die die Zinkenscharen (10, 11) ihren größten Abstand zum Erdboden aufweisen.

5. Feldhäcksler nach Anspruch 4,
**dadurch gekennzeichnet,**
daß die Förderwalze (6) aus einem zylindrischen Grundkörper (7) besteht, auf den mit gleichem Abstand zueinander mit Messerschneiden (9) versehene Leisten (8) fest aufgesetzt sind.

6. Feldhäcksler nach einem oder mehrerer der Ansprüche 1 bis 5,
**dadurch gekennzeichnet,**
daß jedes Kreismesser (28) von einer Welle (27) angetrieben ist, die von einem maschinenfesten Tragrohr (22) bereichsweise umgeben ist, um das die Zinken rotieren.

7. Feldhäcksler nach einem oder mehrerer der Ansprüche 1 bis 6,
**dadurch gekennzeichnet,**
daß jedes Tragrohr (22) einen Flansch (16) aufweist, auf den ein Gehäuse (15) drehbar aufgesetzt ist und welches sowohl ein Kettenrad (17) wie auch die Zinken (12) trägt.

8. Feldhäcksler nach Anspruch 7,
**dadurch gekennzeichnet,**
daß das Gehäuse (15) einen Kragen (14) aufweist, mit dem das Kettenrad (17) und eine Ringplatte (13) verbunden sind, wobei die Ringplatte (13) die Zinken (12) auswechselbar trägt.

9. Feldhäcksler nach einem oder mehrerer der Ansprüche 4 bis 8,
**dadurch gekennzeichnet,**
daß die Förderwalze (6) und die Zinken (12) von einer gemeinsamen Welle (20) aus angetrieben werden.

10. Feldhäcksler nach einem oder mehrerer der Ansprüche 1 bis 9,
**dadurch gekennzeichnet,**
daß die Rotationsebene der Zinken (12) auf den Einzugsspalt eines Förderwalzenpaares 5 des Häckslers (1) zielt.

11. Feldhäcksler nach einem oder mehrerer der Ansprüche 1 bis 10,
**dadurch gekennzeichnet,**
daß der Abstand der Förderebene der Federzinken (12) zum Kreismesser (28) veränderbar ist.

12. Feldhäcksler nach einem oder mehrerer der Ansprüche 1 bis 11,
**dadurch gekennzeichnet,**
daß die Antriebswelle (27) des Kreismessers (28) teleskopierbar in einer Hohlwelle (26) unverdrehbar zu dieser gelagert ist, wobei die Hohlwelle über einen am Tragrohr (22) befestigten Ölmotor (29) antreibbar ist.

13. Feldhäcksler nach Anspruch 12,
**dadurch gekennzeichnet,**
daß das der Hohlwelle (26) abgewandte Ende der Kreismesserantriebswelle (27) im Tragrohr (22) höhenverlagerbar gehalten ist.

14. Feldhäcksler nach einem oder mehrerer der Ansprüche 1 bis 13,
**dadurch gekennzeichnet,**
daß die Umfangsgeschwindigkeit der Zinkenscharen(10, 11) stufenlos einstellbar ist.

## Claims

1. A forage harvester of the self-propelled or towed type, comprising a chopping device formed by a chopping drum (2) and a co-operating cutter, with a conveyor section arranged in front thereof and a front-mounted wood chopping implement (40) for stalk plants, which is open in the direction of travel and substantially comprises two oppositely drivable circular blades (28) which can be set at a relatively small spacing relative to the ground for cutting off the plants to be chopped and a separating wedge member (32) which forms a support for the circular blades (28) and which is stationarily mounted in part above the circular blades (28), wherein also associated with the front-mounted implement (40) is a holding-down bow member (31) which faces inclinedly relative to the direction of travel and which is possibly adjustable in respect of inclination and which leads with respect to the front-mounted implement (40), the front-mounted implement (40) has for each circular blade (28) a device for guiding the cut plants into the conveyor section of the forage harvester (1), and wherein each device for guiding the plants into the conveyor section (5) of the forage harvester comprises a tine assembly (10 and 11 respectively) which rotates in a plane extending inclinedly relative to the horizontal in coaxial relationship with the axis of rotation (27) of the associated circular blade (28) and whose closest spacing relative to the ground is at the side which leads in the direction of travel, characterised in that the plane in which the tine assemblies (10 and 11 respectively) rotate is inclined more greatly relative to the horizontal than the plane in which the respectively associated circular blade (28) rotates and that the envelope circles of the tine ends overlap in the region of an intake gap (36) provided between the two circular blades (28).

2. A forage harvester according to claim 1 characterised in that associated with each of the rotating tine assemblies (10, 11) is a respective stripper (43) which partially covers the chain wheels (17) and delimits the intake gap (36).

3. A forage harvester according to claim 1 or claim 2 characterised in that the envelope circle of the circular blade (28) is smaller than that of the associated tine assembly (10, 11).

4. A forage harvester according to claims 1 to 3 characterised in that associated with both tine assemblies (10 and 11) is a conveyor roller (6) which extends jointly horizontally and transversely with respect to the direction of travel and which is arranged immediately in front of the conveyor section of the harvester and whose envelope circle extends beneath the rotating tine assembly (10 and 11 respectively) at the location at which the tine assemblies (10, 11) are at their greatest spacing relative to the ground.

5. A forage harvester according to claim 4 characterised in that the conveyor roller (6) comprises a cylindrical main body (7) on which there are fixedly mounted bars (8) which are provided with cutting edges (9) at equal spacings relative to each other.

6. A forage harvester according to one or more of claims 1 to 5 characterised in that each circular blade (28) is driven by a shaft (27) which is surrounded in a region-wise manner by a carrier tube (22) which is fixed with respect to the machine and around which the tines rotate.

7. A forage harvester according to one or more of claims 1 to 6 characterised in that each carrier tube (22) has a flange (16) on to which a housing (15) is rotatably fitted and which carries both a chain wheel (17) and also the tines (12).

8. A forage harvester according to claim 7 characterised in that the housing (15) has a collar (14) to which the chain wheel (17) and a ring plate (13) are connected, the ring plate (13) interchangeably carrying the tines (12).

9. A forage harvester according to one or more of claims 4 to 8 characterised in that the conveyor roller (6) and the tines (12) are driven from a common shaft (20).

10. A forage harvester according to one or more of claims 1 to 9 characterised in that the plane of rotation of the tines (12) points at the intake gap of a pair (5) of conveyor rollers of the harvester (1).

11. A forage harvester according to one or more of claims 1 to 10 characterised in that the spacing of the conveyor plane of the spring tines (12) relative to the circular blade (28) is variable.

12. A forage harvester according to one or more of claims 1 to 11 characterised in that the drive shaft (27) of the circular blade (28) is mounted telescopically in a hollow shaft (26) non-rotatably with respect thereto, wherein the hollow shaft is drivable by way of an oil motor (29) fixed to the carrier tube (22).

13. A forage harvester according to claim 12 characterised in that the end of the circular blade drive shaft (27), which is remote from the hollow shaft (26), is held displaceably in respect of height in the carrier tube (22).

14. A forage harvester according to one or more of claims 1 to 13 characterised in that the peripheral speed of the tine assemblies (10, 11) is steplessly adjustable.

## Revendications

1. Ensileuse du type automotrice ou tractée, comprenant un dispositif de hachage formé d'un tambour-hacheur (2) et d'un contre-couteau, avec un convoyeur disposé en avant et un outil frontal (40) de hachage des produits ligneux, en forme de châssis ouvert dans la direction de déplacement, pour des plantes à tiges, qui comprend essentiellement deux couteaux rotatifs (28) entraînés en sens contraire, pouvant être réglés à une distance relativement faible du sol pour couper les plantes à hacher ainsi qu'un diviseur (33) qui forme un contre appui pour les couteaux rotatifs (28) et est monté stationnaire en partie au-dessus des couteaux rotatifs (28), un rabatteur (31) incliné par rapport à la direction de déplacement, le cas échéant réglable en inclinaison, disposé en avant par rapport à l'outil frontal (40), étant associé à l'outil frontal (40), l'outil frontal (40) comportant pour chaque couteau rotatif (28) un dispositif qui dirige la plante coupée vers le convoyeur de l'ensileuse et chacun des dispositifs amenant les plantes dans le convoyeur (5) de l'ensileuse (1) étant formé d'un ensemble de dents (10 et 11) animées d'un mouvement de rotation dans un plan incliné par rapport à l'horizontale, coaxialement à l'axe de rotation (27) du couteau rotatif (28) concerné, dont la distance la plus faible par rapport au sol est située à l'avant vu dans la direction de déplacement, caractérisée en ce que le plan dans lequel tournent les ensembles de dents (10 et 11) présente une inclinaison par rapport à l'horizontale plus forte que le plan dans lequel tourne le couteau rotatif (28) associé et en ce que les cercles enveloppes des extrémités de dents se coupent dans la région d'une fente d'entrée (36) prévue entre les deux couteaux rotatifs (25).

2. Ensileuse selon la revendication 1, caractérisée en ce qu'un décolleur (43) qui couvre partiellement le pignons à chaîne et limite la fente d'entrée (36) est associé aux dents (10, 11) rotatives.

3. Ensileuse selon la revendication 1 ou 2, caractérisée en ce que le cercle enveloppe des couteaux rotatifs (28) est plus petit que celui de l'ensemble de dents (10, 11) associé.

4. Ensileuse selon les revendications 1 à 3, caractérisée en ce qu'aux deux ensembles de dents (10, 11) est associé un tambour de d'amenée (6) commun qui est disposé horizontalement et transversalement à la direction de déplacement, immédiatement en amont du convoyeur de l'ensileuse, dont le cercle enveloppe s'étend en-dessous de l'ensemble de dents (10, 11) rotatif à l'endroit où l'ensemble de dents (10, 11) est le plus éloigné du sol.

5. Ensileuse selon la revendication 4, caractérisée en ce que le tambour d'amenée (6) est formé d'un corps de base (7) cylindrique avec montées sur celui-ci des barres (9) fixes, pourvues de couteaux (9), qui sont disposées à égale distance les unes des autres.

6. Ensileuse selon une ou plusieurs des revendications 1 à 5, caractérisée en ce que chaque couteau rotatif (28) est entraîné par un arbre (27) qui est entouré localement par un tube de support (22), solidaire de la machine, autour duquel tournent les dents.

7. Ensileuse selon une ou plusieurs des revendications 1 à 6, caractérisée en ce que chaque tube de support (22) comporte une bride (16) sur laquelle un carter (15) est monté tournant et qui porte à la fois un pignon à chaîne (17) et les dents (12).

8. Ensileuse selon la revendication 7, caractérisée en ce que le carter (15) présente un collet (14) au moyen duquel le pignon à chaîne (17) et une plaque annulaire (13) sont liées, la plaque annulaire (13) portant les dents (12) interchangeables.

9. Ensileuse selon une ou plusieurs des revendications 4 à 8, caractérisée en ce que le tambour d'amenée (6) et les dents (12) sont entraînés par un arbre commun (20).

10. Ensileuse selon une ou plusieurs des revendications 1 à 9, caractérisée en ce que le plan de rotation des dents (12) est orienté en direction de la fente d'entrée (41) d'une paire de tambours d'alimentation (5) de l'ensileuse.

11. Ensileuse selon une ou plusieurs des revendications 1 à 10, caractérisée en ce que la distance entre le plan de transport des dents (12) élastiques et le couteau rotatif (28) est réglable.

12. Ensileuse selon une ou plusieurs des revendications 1 à 11, caractérisée en ce que l'arbre d'entraînement (27) du couteau rotatif (28) est monté télescopique dans un arbre creux (26) en étant solidaire en rotation de celui-ci, l'arbre creux étant entraîné par un moteur hydraulique (29) fixé au tube de support (22).

13. Ensileuse selon la revendication 12, caractérisée en ce que l'extrémité de l'arbre (27) d'entraînement du couteau rotatif éloignée de l'arbre creux (26) est liée au tube de support avec possibilité de déplacement en hauteur.

14. Ensileuse selon une ou plusieurs des revendications 1 à 13, caractérisée en ce que la vitesse périphérique des ensembles de dents (10, 11) est réglable de façon continue.
